# DEMANDE DE BREVET EUROPEEN

(11) **EP 0 895 975 A1**
(43) Date de publication de la demande: **10.02.1999**
(21) Numéro de dépôt: 97401895.4
(22) Date de dépôt: 07.08.1997
(51) Int. Cl.: C05G 3/00, C05F 3/00, C05F 7/00

(54) **Procédé de traitement des déjections rejets et rebuts, provenant des installations industrielles, citadines et agricoles, produits obtenus à partir dudit procédé et installation pour la mise en oeuvre dudit procédé**

(71) Demandeur: SC Kheper Biotechnologies, 91270 Vigneux sur Seine (FR)
(72) Inventeur: Marchese, Edoardo, 75017 Paris (FR)
(74) Mandataire: Tanguy, Gilbert André

(57) **Abrégé**

La présente invention a pour objet un procédé de traitement de produits organiques nocifs pour l'environnement, provenant des déjections d'animaux, de boues d'égouts, de boues industriels et de boues de traitement des eaux, pour les transformer en engrais ou amendant agricole. Selon cette invention, on ajoute à une solution liquide du produit organique nocif, une solution de pentoxyde de phosphore et d'oxyde de potassium en proportions appropriées pour obtenir dans le produit final le rapport souhaité entre l'azote, le phosphore et le potassium, et en fonction de la nature du sol et du type d'application, après quoi en mélange la solution obtenue avec un produit susceptible de retenir de l'eau, ayant la forme désirée du produit final, de façon à obtenir un engrais conformé et conditionné que l'on soumet à un traitement de dessiccation. L'invention vise également les produits de type engrais ou amendant des terres, obtenus par ce procédé. Elle concerne également une installation pour la mise en oeuvre de ce procédé.

## Description

La présente invention a pour objet un procédé de traitement des déjections, rejets et rebuts provenant des installations industrielles, citadines et agricoles, de façon à les transformer en engrais ou amendant agricole. C'est à dire que l'invention englobe le traitement de l'ensemble des déjections d'animaux, des boues organiques obtenues au cours du traitement ou de la purification des eaux et de tout produit organique provenant d'une installation quelconque dans la mesure où ce produit pourra provoquer des nuisances pour l'environnement

Dans la technique antérieure, on connaît un procédé pour traiter les excréments d'animaux, afin de les désodoriser. Ce procédé est plus particulièrement connu sous la dénomination "traitement de nitrification/dénitrification". En fait, grâce à la présence de micro-organismes dont le développement est favorisé par l'oxygène de l'air, c'est-à-dire que l'on développe une technique aérobique, les excréments d'animaux se transforment en un liquide sans odeur qui est constitué d'une solution d'éléments et de composés comportant de l'azote, du phosphore, du potassium et autres composés, tout en présentant une partie colloïdale organique en suspension dans ce milieu liquide. L'azote ammoniacal, qui est le responsable principal de l'odeur diminue d'environ 95 % avec ce traitement. Les excréments d'animaux ainsi traités peuvent être utilisés pour l'épandage dans les champs sans inconvénient du point du vue de l'odeur.

Toutefois ce produit présente des limites d'utilisation comme engrais, du fait que, d'une part, les réglementations en vigueur limitent la quantité et la fréquence des épandages dans les champs et que, d'autre part, l'engrais n'est pas équilibré du point du vue de la composition chimique entre les trois éléments typiques qui constituent un engrais, à savoir l'azote, le phosphore et le potassium. Par ailleurs le liquide est difficilement transportable, présente une tendance à la décantation, ce qui complique un épandage homogène, et, de plus, sa manipulation est compliquée. Il est résulte que les excréments d'animaux, même à l'état désodorisés, sont difficilement utilisables loin du lieu d'élevage.

Dans la demande de brevet n° 2.717.173, au nom de la demanderesse, est proposé un procédé, issu d'une technologie qui permet de transformer les excréments d'animaux désodorisés en engrais complet et équilibré entre tous ses composants, à savoir principalement l'azote, le phosphore et le potassium, cet engrais étant soumis à un traitement de dessiccation ce qui le rend facilement maniable et transportable.

A la suite de recherches ultérieures, la demanderesse a découvert que ce procédé, malgré les caractéristiques physiques et chimiques particulières du lisier de porc, pouvait être appliqué au traitement de l'ensemble des déchets, rejets et déjections organiques provenant des activités diverses, industrielles, agricoles et citadines.

C'est ainsi que dans le secteur des boues que l'on obtient lors du traitement des effluents provenant des égouts et de celles provenant des traitements d'épuration des eaux, interviennent certains problèmes qui, bien que différents, conduisent à la même conclusion qu'on ne peut pas déverser les boues dans les décharges publiques, pas plus qu'on ne peut les utiliser en agriculture pour amender les sols. Les boues de ce type ont souvent une odeur un peu plus supportable que celle des déjections des animaux, mais la plupart du temps, elles contiennent des quantités non admises par les lois et réglementations en vigueur, concernant leur teneur en métaux lourds tel que le chrome, le cadmium, le mercure et analogue, ce qui donne lieu à l'interdiction de leur utilisation de même que le déversement dans les décharges publiques.

En outre, les boues renferment toujours des bactéries, et, si on tente de les sécher, elles forment des agglomérats difficilement maniables et, en tout cas inutilisables.

Dans la technique antérieure, on connaît un procédé capable d'éliminer les métaux lourds des boues organiques. Le procédé de l'invention est mis en oeuvre en aval, après que les boues ont été libérées des métaux lourds.

Un objet de la présente invention est donc d'obvier aux inconvénients mentionnés ci-dessus dans les procédés antérieurs destinés aux traitements des produits organiques nocifs pour l'environnement, notamment ceux des déjections animales et des boues industrielles et citadines, en proposant un procédé permettant, grâce à une technologie toute nouvelle de transformer les déjections désodorisées ou les boues libérées des métaux lourds en amendant pour le sol ou en engrais complets, tout en réalisant un équilibrage entre tous leurs composants, à savoir principalement l'azote, le phosphore et le potassium, cet amendant ou cet engrais étant soumis à un traitement de stérilisation pour se débarrasser des bactéries suivi d'un traitement de dessiccation de façon à le rendre facilement maniable et transportable.

Un autre objet de l'invention est de proposer un procédé de fabrication d'un amendant ou d'un engrais, qui, par ses caractéristiques physiques et chimiques, satisfasse aux normes de pollution en vigueur dans le monde, notamment en France et dans les pays de l'Union Européenne.

La présente invention a donc pour objet un procédé de traitement des déjections, des rejets et des rebuts nocifs pour l'environnement et provenant d'installations industrielles, citadines et agricoles, par exemple des excréments d'animaux et des boues, pour les transformer en engrais ou en amendants agricoles, ce procédé étant caractérisé en ce que l'on ajoute à une dispersion dans l'eau de ces produits organiques nocifs, ou de mélanges d'au moins deux d'entre eux, une solution correctrice de pentoxyde de phosphore et d'oxyde de potassium en proportions appropriées pour obtenir dans le produit final le rapport souhaité entre l'azote, le phosphore et le potassium et ce en fonction du sol à traiter et du type d'application ; après quoi on mélange la solution obtenue avec un produit susceptible de retenir de l'eau, ayant la forme désirée du produit final, de façon à obtenir un engrais conformé et conditionné que l'on soumet à un traitement de dessiccation.

Le procédé objet de la présente invention est en outre remarquable par les points suivants :
- le produit susceptible de retenir l'eau est un polymère choisi, par exemple, parmi les dérivés des polyacrylamides, de préférence des copolymères simples ou réticulés avec d'autres monomères,
- le polymère susceptible de retenir la phase aqueuse est utilisé sous la forme de granulés de façon à obtenir un engrais ou un amendant agricole sous forme granulaire.

L'invention vise également un produit sous forme de granulés, obtenu selon le procédé décrit ci-dessus et comportant de 8 à 40 % de matières minérales totales, de 4 à 40 % d'azote total, de 4 à 10 % de phosphore (P2O5), de 2 à 10 % de potassium (K2O), de 0,3 à 0,5 % d'azote ammoniacal, le reste étant un polymère susceptible de retenir l'eau.

Ce polymère peut être remplacé, en partie, par des argiles ou par des aluminosilicates hydratés de métaux alcalins ou alcalino-terreux, qui présentent la capacité de lier des molécules d'eau en les libérant facilement, suite, par exemple, à une augmentation de température, sans que leur structure réticulaire soit déformée et en les réabsorbant facilement.

L'invention prévoit également la possibilité de conférer au produit final des caractéristiques autres que celles d'engrais ou d'amendants agricoles classiques. Dans le produit final, on peut, par exemple, introduire des produits particuliers, afin de fournir au sol des apports spécifiques qui faciliteront certaines cultures telles que le fer, le bore etc. On peut également ajouter des oligo-éléments particulièrement intéressants pour certaines cultures horticoles. On peut aussi introduire des phytosanitaires de type "systémique", qui sont absorbés par les racines et servent à prévenir ou à soigner les maladies végétales. Il est approprié que la totalité de ces additifs soient ajoutés à la phase liquide avant de procéder à l'introduction dans le polymère.

Le procédé de la présente invention est avantageusement mis en oeuvre en utilisant un dispositif permettant d'analyser en continu la dispersion aqueuse de produits organiques nocifs par exemple des excréments ou des boues, que l'on maintient sous agitation, afin d'obtenir un mélange uniforme et d'éviter la sédimentation, ce dispositif étant pourvu d'un système de sonde destiné à mesurer, en continu, le pourcentage des éléments nutritifs renfermés dans le produit, par exemple, de l'azote, du phosphore, du potassium et analogue.

Les valeurs mesurées par ce dispositif sont traitées dans un ordinateur, qui, sur la base du rapport azote/phosphore/potassium désiré dans le produit sec final, permet de calculer combien de litres de chaque solution correctrice doivent être injectés dans la masse. Ce calcul est effectué en tenant compte du volume total de la dispersion à traiter et de la concentration des liquides correcteurs.

Ces liquides correcteurs sont avantageusement, comme déjà spécifiés ci-dessus, des solutions aqueuses de pentoxyde de phosphore et d'oxyde de potassium. Une fois déterminée la quantité de liquides correcteurs ajoutés, l'ordinateur commande la mise en marche de pompes doseuses ou d'un autre système pour injecter ces liquides.

Par la suite, on mélange la solution obtenue avec un produit susceptible de retenir une phase aqueuse, ce produit ayant la forme du produit final souhaité de façon à obtenir un engrais ou un amendant agricole conformé et conditionné de façon appropriée et auquel on fait subir un traitement de stérilisation pour éliminer les bactéries, suivi d'un traitement de dessiccation.

D'autres caractéristiques et avantages de la présente invention apparaîtront à la lecture de l'exemple de préparation suivant d'un engrais fabriqué à partir d'excréments d'animaux en mettant en oeuvre le procédé de l'invention. Cet exemple est donné à titre uniquement illustratif et ne limite en rien la portée de l'invention.

### Exemple :

Dans un mode de réalisation du procédé selon l'invention, on utilise comme matière première des produits organiques nuisibles pour l'environnement, par exemple des excréments solides et liquides d'animaux d'élevage qui ont été désodorisés selon la technique de nitrification/dénitrification exposée ci-dessus. On ajoute à ces excréments, par le biais du dispositif particulièrement étudié pour mettre en oeuvre le procédé de l'invention et décrit ci-dessus, une solution de pentoxyde de phosphore et d'oxyde de potassium, calculée par l'ordinateur du dispositif sur la base du rapport particulier que l'on veut obtenir dans le produit final, entre l'azote, le phosphore et le potassium.

On obtient ainsi une solution que l'on mélange avec un polymère rétenteur d'eau, par exemple un copolymère de polyacrylamide. Ce polymère qui se présente à l'état sec sous la forme d'un granulé transparent, présente la propriété de gonfler en absorbant des phases aqueuses par ses faces semi-perméables en contact avec le milieu liquide. C'est ainsi que la solution aqueuse à base de composés d'azote, de phosphore et de potassium, qui constitue la composante principale du produit organique nocif pour l'environnement, pénètre à l'intérieur du granulé et vient le gonfler.

Lorsque la solution aqueuse a pénétré à l'intérieur du granulé, la partie organique en suspension dans le produit organique nocif se dépose alors sur la surface du granulé gonflé. Dès que la masse des granulés a absorbé la totalité du liquide, les granulés sont soumis à une technique de dessiccation, par exemple en utilisant un courant d'air chaud pulsé. Une fois ce traitement terminé, les granulés séchés reprennent leur forme et leur dimension d'origine, tout en renfermant les éléments chimiques complets d'un engrais, tandis qu'ils sont enrobés pour une couche mince qui est constituée des éléments organiques qui ont fourni à l'origine la suspension colloïdale, riche elle aussi en éléments fertilisants. Il est à noter que les éléments et composants chimiques principaux et essentiels restent confinés à l'intérieur des granulés. Les produits ainsi obtenus constituent un excellent engrais qui possède deux caractéristiques essentielles, en premier lieu, l'aptitude à libérer lentement les principes actifs qu'il renferme, en second lieu, le fait de n'être pas sujet, dans le cas de pluie, notamment de pluies torrentielles à une action de transfert de ces éléments constitutifs, vers les cours d'eau et vers les nappes phréatiques.

Selon un mode d'application, les granulés à l'état sec sont répandus sur le sol par exemple, dans la proportion de 20 à 30 grammes par m2 puis mélangés avec la terre jusqu'à une profondeur de 20 cm. En présence d'eau, ces granulés gonflent par exemple lors d'une chute de pluie ou bien de l'application d'une technique d'irrigation, ce qui les fait augmenter de volume plusieurs centaines de fois. La couche extérieure de ces granulés, sur laquelle a été déposée la partie colloïdale de la solution d'excréments traitée, reprend son aspect colloïdal et devient immédiatement utilisable, en tant qu'engrais, par les plantes qui peuvent ainsi se nourrir de ces éléments nutritifs.

Il est à noter que la paroi semi-imperméabilité du granulé, cette semi-imperméabilité étant une des propriétés essentielles des polymères rétenteurs d'eau, permet l'entrée très rapide d'une phase aqueuse, par exemple de l'eau de pluie, et une sortie très lente de cette phase aqueuse, évidemment modifiée par l'incorporation d'éléments fertilisants. Les racines des plantes peuvent également pénétrer à l'intérieur des granulés où elles trouvent les éléments fertilisants y contenus. Lorsque le granulé sèche en ayant perdu l'eau qu'il renferme, une nouvelle pluie ou une nouvelle irrigation le fait gonfler à nouveau ce qui forme dans le sol de petites réserves d'eau enrichies d'éléments nutritifs. Le cycle se répète pendant un certain temps qui est fonction du polymère rétenteur d'eau et de beaucoup d'autres facteurs qui sont difficiles à contrôler. La lente biodégradation du produit permet d'estimer sa durée de vie entre 3 et 5 ans.

Ce processus, selon lequel l'eau pénètre très facilement dans les granulés, pour en sortir très lentement présente l'avantage que, en cas de fortes pluies, l'élément fertilisant ne quitte pas le granulé, ce qui évite une pollution des rivières et des nappes phréatiques. On peut donc estimer qu'avec ce mode de réalisation, les excréments d'animaux et/ou les boues sont transformés en un engrais complet ou en un agent amendant le sol, qui présente la caractéristique d'être propre, inodore, facile à stocker et qui présente un avantage écologique essentiel par rapport aux autres engrais qui sont, en grande majorité, emportés par l'eau de ruissellement, en cas de très fortes pluies ou d'irrigations abondantes.

On donnera, dans ce qui suit, un exemple de formulations non limitatives : pour réaliser un engrais selon l'invention, on mélange 4 parties en poids d'excréments d'animal désodorisés qui présentent la composition suivante : 4,8 % de matière sèche, 2,0 % de matière minérale totale, de 2,5 % de matières organiques, 0,16 % d'azote total et 0,36 % de phosphore total, 0,40 % de potassium total et 0,013 % d'azote ammoniacal, avec une partie d'une solution chélatée de pentoxyde de phosphore et d'oxyde de potassium, distribués par la société NPK. Cette opération est réalisée à l'aide du dispositif décrit ci-dessus, grâce auquel on peut calculer automatiquement les quantités à injecter en fonction des caractéristiques souhaitées pour le produit final. Dès que la masse est bien homogénéisée, on ajoute deux parties en poids d'un polymère acrylique vendu sous la dénomination commerciale *STOCKOSORB* par la société *STOCK HAUSEN*.

On laisse gonfler la masse pendant quelques dizaines de minutes après quoi on la soumet à un traitement de dessiccation jusqu'à ce qu'on obtienne un granulé parfaitement sec. Le produit est conservé dans un endroit et/ou un emballage étanche en évitant tout contact avec l'air, du fait de la forte hygroscopie dudit produit.

Le même mode de réalisation peut être mis en oeuvre si la matière de départ est constituée de boues qui proviennent des égouts du traitement des eaux. Dans ce cas, on peut habituellement éviter un traitement de désodorisation. Si par contre, une désodorisation est nécessaire, elle est réalisée par le même procédé que celui mise en oeuvre pour les excréments des animaux.

On ajoute ensuite des solutions de pentoxyde de phosphore et d'oxyde d'azote dans le cas où l'on veut obtenir un engrais. Dans le cas contraire, on obtient un bon amendant agricole qui améliore les caractéristiques physiques du sol, de même on mélange avec un des polymères acryliques spécifiés ci-dessus et on laisse gonfler. En outre, on peut ajouter un produit à base d'argile ou un aluminosilicate hydraté de métal alcalin ou de métal alcalino-terreux qui lui aussi participe à l'action de blocage des molécules d'eau à l'intérieur du produit. Ce dernier est alors séché après quoi il est conditionné en tenant compte de son hygroscopicité. Lors de la dessiccation, un chauffage doit être prévu suffisamment long et la température suffisamment élevée afin d'éliminer les bactéries que les boues sont susceptibles de renfermer.

Le comportement de ce produit, soit enrichi avec des solutions fertilisantes pour devenir un engrais, soit simplement en qualité d'amendant du sol, est similaire à celui de l'engrais produit avec les excréments des animaux surtout en ce qui concerne le pouvoir de capter l'eau et de la garder, tout en ne permettant aux composés chimiques d'être libérés trop rapidement puis transportés par l'eau dans les nappes phréatiques. Il est à noter que le pouvoir fertilisant sera évidemment fonction de la richesse en fertilisant du produit de départ et des éventuels éléments ajoutés au cours de la fabrication.

Un exemple non limitatif de formulations pour préparer un agent amendant est le suivant : on prend 4 parties de boues que l'on mélange avec 2 parties (sur la base de la matière sèche des boues) d'un polymère acrylique tel que décrit ci-dessus et l'on ajoute au mélange une partie d'argile par exemple, du type bentonite. On laisse gonfler la masse que l'on soumet à un traitement de dessiccation jusqu'à ce que l'on obtienne un granulé parfaitement sec.

Il est clair que l'invention n'est nullement limitée aux exemples ci-dessus, mais qu'elles enveloppent toutes les modifications et variantes issues du même principe de base, dont la portée est définie par les revendications suivantes. C'est ainsi que n'importe quel autre polymère susceptible de retenir l'eau, ou la phase aqueuse, peut être utilisé pour cette application.

## Revendications

1. Procédé de traitement de produits organiques nocifs pour l'environnement, à l'exception du lisier de porc, provenant des déjections d'animaux, de boues d'égouts, de boues industrielles et de boues de traitements des eaux, pour les transformer en engrais, caractérisé en ce qu'on ajoute à une solution liquide du produit organique nocif, une solution de pentoxyde de phosphore et d'oxyde de potassium en proportions appropriées pour obtenir dans le produit final le rapport souhaité entre l'azote, le phosphore et le potassium, et en fonction de la nature du sol et du type d'application, après quoi en mélange la solution obtenue avec un produit susceptible de retenir de l'eau, ayant la forme désirée du produit final, de façon à obtenir un engrais conformé et conditionné que l'on soumet à un traitement de dessiccation.

2. Procédé de traitement de produits organiques nocifs pour l'environnement, sur la revendication 1, caractérisé en ce que le produit rétenteur d'eau est un polymère choisi parmi les dérivés simples ou réticulés des polyacrilamides.

3. Procédé de traitement de produits organiques nocifs pour l'environnement, selon les revendications 1 et 2, caractérisé en ce que le polymère est utilisé sous la forme de granulés de façon à obtenir un engrais sous forme de granulés.

4. Produit sous la forme de granulés, obtenu selon l'une des quelconques revendications 1 à 3.

5. Produit selon la revendication 4, caractérisé en ce qu'il comporte de 8 à 40 % de matières minérales totales, de 4 à 10 % d'azote total, de 4 à 10 % de phosphore, de 2 à 10 % de potassium, de 0,3 à 0,5 % d'azote ammoniacal, le reste étant un polymère susceptible de retenir l'eau.

6. Produit selon les revendications 4 et 5, caractérisé en ce qu'il contient, en outre un produit choisi parmi les argiles ou les aluminosilicates hydratés de métaux alcalins ou alcalino-terreux.

7. Produit selon l'une quelconque des revendications 4 à 6, et caractérisé en ce qu'il a été traité avec des solutions de fertilisants, y compris solutions d'oligo-éléments et/ou agents phytosanitaires.

8. Produit selon l'une quelconque des revendications 4 à 7 caractérisé en ce qu'il a été traité avec des adjuvants minéraux, par exemple le fer, le bore.

9. Produit selon une quelconque des revendications 4 à 8, caractérisé en ce que ces différents adjuvants sont ajoutés à la phase liquide du produit avant de procéder à son introduction dans le polymère rétenteur.

10. Installation pour la mise en oeuvre du procédé selon la revendication 1, caractérisé en ce qu'il comporte :
- des moyens permettant d'analyser en continu, au moyen de sondes, la dispersion aqueuse de produits nocifs et
- des moyens de traitement, de type ordinateur, permettant de calculer, sur la base du rapport azote-phosphore-potassium, désiré, la quantité de chaque produit de la solution correctrice devant être injectée dans la dispersion aqueuse.
